# EUROPEAN PATENT SPECIFICATION

(11) **EP 4 162 895 B1**
(45) Date of publication and mention of the grant of the patent: **27.11.2024**
(21) Application number: 22732379.7
(22) Date of filing: 20.01.2022
(51) Int. Cl.: A61C 3/025, A61C 1/00

(54) **DENTAL POWDER-JET HANDPIECE**
ZAHNÄRZTLICHES PULVERSTRAHLHANDSTÜCK
PIÈCE À MAIN À JET DE POUDRE DENTAIRE

(30) Priority: 24.08.2021 CN 202110975263; 24.08.2021 CN 202122005801 U
(43) Date of publication of application: 12.04.2023
(73) Proprietor: Guilin Woodpecker Medical Instrument Co., Ltd., Guilin, Guangxi 541004 (CN)
(72) Inventor: WU, Xunxian, Guilin, Guangxi 541004 (CN); TANG, Peng, Guilin, Guangxi 541004 (CN); ZHANG, Libin, Guilin, Guangxi 541004 (CN)
(74) Representative: Dilg, Haeusler, Schindelmann Patentanwaltsgesellschaft mbH
(86) International application number: PCT/CN2022/072908
(87) International publication number: WO 2023/024430

(56) References cited:
- WO-A1-2008/115129
- CN-A- 107 427 337
- CN-A- 111 588 488
- CN-A- 112 107 381
- CN-A- 112 773 523
- CN-A- 113 017 865
- CN-A- 113 143 517
- CN-A- 113 476 156
- CN-U- 215 458 798
- US-A1- 2018 071 051

## Description

The present disclosure claims priority of Chinese patent application with the filing number 202110975263.4 filed on August 24, 2021 with the Chinese Patent Office, and entitled "Dental Sand Blasting Gun", and priority of Chinese patent application with the filing number 202122005801.5 filed on August 24, 2021 with the Chinese Patent Office, and entitled "Dental Sand Blasting Gun".

### Technical Field

The present disclosure relates to the technical field of treatment and prevention of dental disease, in particular to a dental sand blasting gun.

### Background Art

A dental sand blasting gun uses compressed gas (usually air) to spray dental sand blasting powder (wherein the main ingredient is usually sodium bicarbonate, glycine or erythritol) onto the tooth surface, and merges with the liquid medium (usually water) sprayed together to clean the tooth surface. Specifically, plaque, soft dirt, tobacco stains and tea stains and the like on the tooth surface above and below the gums can be removed, which can prevent periodontal disease and maintain the health of teeth.

After the dental sand blasting gun is used, it is necessary to remove the dental sand blasting powder remained in the sand blasting handle of the dental sand blasting gun to prevent the dental sand blasting powder from being damp and blocking the sand blasting handle of the dental sand blasting gun.

In the prior art, the method of removing the dental sand blasting powder remained in the sand blasting handle is to pour out the dental sand blasting powder in the sand powder tank, and then supply compressed gas through the gas supply device, wherein the compressed gas needs to pass through the sand powder tank first and then be supplied into the sand blasting handle to remove the dental sand blasting powder remained in the sand blasting handle. Considering the circulation path of the compressed gas, the dental sand blasting powder in the sand powder tank consequentially needs to be poured out in this removing method, which will result in waste of the dental sand blasting powder.

Therefore, how to remove the dental sand blasting powder remained in the sand blasting handle of the dental sand blasting gun, and simultaneously, reduce the waste of the dental sand blasting powder has become a technical problem to be solved urgently by those skilled in the art. CN 112 773 523 A and CN 111 588 488 A disclose a dental sand blasting gun, comprising a sand blasting handle and a sand powder tank, wherein the sand blasting handle is communicated with the sand powder tank, and the sand powder tank is communicated with a gas supply device of a dental chair through a dental chair hose, and the gas supply device supplies compressed air to the sand powder tank through the dental chair hose,a lower end of the sand powder tank is provided with a gas inlet hole, and a gas inlet end of the gas inlet hole is communicated with the dental chair hose, wherein the lower end of the sand powder tank is provided with a first gas outlet hole.

### Summary

In view of this, the present disclosure proposes a dental sand blasting gun, so as to remove the dental sand blasting powder remained in the sand blasting handle of the dental sand blasting gun, and simultaneously, reduce the waste of the dental sand blasting powder.

In order to achieve the above-mentioned purpose, the present disclosure provides a dental sand blasting gun, which comprises a sand blasting handle and a sand powder tank,
wherein the sand blasting handle is communicated with the sand powder tank, and the sand powder tank is communicated with a gas supply device of a dental chair through a dental chair hose, and the gas supply device supplies compressed air to the sand powder tank through the dental chair hose,
a lower end of the sand powder tank is provided with an gas inlet hole, and a gas inlet end of the gas inlet hole is communicated with the dental chair hose,
the lower end of the sand powder tank is provided with a first gas outlet hole and a second gas outlet hole, a gas outlet end of the first gas outlet hole is communicated with an inner cavity of the sand powder tank, and a gas outlet end of the second gas outlet hole is communicated with the sand blasting handle through a purging pipe, a gas inlet end of the first gas outlet hole and a gas inlet end of the second gas outlet hole are communicated with a gas outlet end of the gas inlet hole through a reversing valve, and the reversing valve is configured to control the gas inlet hole to be communicated with the first gas outlet hole or the second gas outlet hole.

Preferably, in the above-mentioned dental sand blasting gun, the reversing valve comprises a valve body, a valve core and a drive rod,
wherein the valve body is connected to the sand powder tank, and a valve hole, a first hole communicated with the gas inlet hole, a second hole communicated with the first gas outlet hole and a third hole communicated with the second gas outlet hole are provided on the valve body, the first hole is located at an opposite side of an axial line of the valve hole relative to the second hole and the third hole, and the first hole is located between the second hole and the third hole;
the valve core is installed in the valve hole, and an annular groove is formed on the valve core, and the annular groove is configured to be communicated with the first hole and the second hole or the first hole and the third hole, a position of the valve core located at two ends of the annular groove is provided with a sealing ring, the valve core is connected with the drive rod, the drive rod is configured to drive the valve core to move in the valve hole.

Preferably, in the above-mentioned dental sand blasting gun, a baffle plate is provided at one end of the valve core cooperating with the drive rod, and a diameter of the baffle plate is larger than a diameter of the valve core;
the valve hole comprises a first valve hole segment and a second valve hole segment, a diameter of the first valve hole segment is smaller than a diameter of the second valve hole segment, and the baffle plate slides in the second valve hole segment; and
the reversing valve further comprises a return spring, the return spring is sleeved over the valve core, and one end of the return spring may abut against a stepped face formed between the first valve hole segment and the second valve hole segment, and the other end of the return spring may abut against the baffle plate.

Preferably, in the above-mentioned dental sand blasting gun, the drive rod comprises a cam and a deflector rod, wherein the cam is located in the valve hole and is rotatably connected to the valve body, the deflector rod is connected to an outer edge of the cam and configured to drive the cam to rotate, and the cam pushes the baffle plate to move along the second valve hole segment,
and the cam and the deflector rod are integrally formed.

Preferably, in the above-mentioned dental sand blasting gun, the cam and the valve body are connected by a pin.

Preferably, in the above-mentioned dental sand blasting gun, a gas intake duct is provided in the sand powder tank, a lower end of the gas intake duct communicates with the first gas outlet hole, and a upper end of the gas intake duct is provided with a reverse cap, and the reverse cap is configured to guide compressed gas discharged from the gas intake duct downward.

Preferably, in the above-mentioned dental sand blasting gun, a lower end of the sand powder tank is provided with a spherical guide plate, an inner arc surface of the spherical guide plate faces toward the gas intake duct, and a third gas outlet hole communicated with the first gas outlet hole is provided on the spherical guide plate, and the gas intake duct is installed in the third gas outlet hole.

Preferably, in the above-mentioned dental sand blasting gun, a sand outlet pipe of the sand powder tank is provided on a side wall of the sand powder tank, a upper end of the sand outlet pipe is communicated with the inner cavity of the sand powder tank, and a lower end of the sand outlet pipe is communicated with the sand blasting handle, and the sand outlet pipe is communicated with the purging pipe.

Preferably, in the above-mentioned dental sand blasting gun, the sand blasting handle is communicated with the sand outlet pipe through a hose, and the sand powder tank may be installed on the dental chair.

Preferably, in the above-mentioned dental sand blasting gun, duckbill valves are provided in the first gas outlet hole and the second gas outlet hole.

In a dental sand blasting gun provided by the embodiment of the present disclosure, when a dental sand blasting powder in the sand blasting handle is removed, the dental sand blasting powder in a sand powder tank does not need to be poured out. A reversing valve, a second gas outlet and a purging pipe are additionally arranged in the sand powder tank, an gas inlet is enabled to be communicated with the second gas outlet through the reversing valve, and the gas inlet is not communicated with a first gas outlet, then, compressed gas entering the second gas outlet is introduced into the sand blasting handle through the purging pipe, and the dental sand blasting powder remained in the sand blasting handle is purged and removed; the gas used for purging and removing the dental sand blasting powder remained in the sand blasting handle does not need to pass through the sand powder tank, so it is not necessary to pour out the dental sand blasting powder in the sand powder tank, thereby reducing the waste of dental sand blasting powder; simultaneously, according to the dental sand blasting gun disclosed in the present disclosure, the sand blasting handle and the sand powder tank are separately designed, that is, the sand powder tank is not installed on the sand blasting handle, but is communicated with the sand blasting handle through a hose, and the sand powder tank is fixed on the dental chair, so that a user only needs to hold the sand blasting handle when using the dental sand blasting gun, the weight of the held part of the dental sand blasting gun is reduced, the use comfort of the dental sand blasting gun is improved, and the hand fatigue feeling is relieved; and meanwhile, the sand powder tank does not occupy the space around the sand blasting handle, which reduces the volume of the sand blasting handle, reduces the influence on the visual field of a user, and improves the convenience of operation.

### Brief Description of Drawings

In order to more clearly illustrate the technical solutions in the embodiments of the present disclosure or in the prior art, accompanying drawings which need to be used for description of the embodiments or the prior art will be introduced briefly below. Apparently, the accompanying drawings in the following description merely show some examples or embodiments of the present disclosure, and those ordinarily skilled in the art still could obtain other drawings in light of provided accompanying drawings, without using any inventive efforts, and also apply the present disclosure to other similar scenarios in accordance with the provided accompanying drawings. Unless obvious from the language environment or otherwise specified, the same reference numbers in the drawings represent the same structure or operation.
FIG. 1 is a structural schematic view of a dental sand blasting gun of the present disclosure;
FIG. 2 is a sectional view of the reversing valve cooperating with the sand powder tank when the dental sand blasting gun of the present disclosure cleans the teeth; and
FIG. 3 is a sectional view of the reversing valve cooperating with the sand powder tank of the dental sand blasting gun of the present disclosure when purging the sand blasting handle.

In the above:
1, dental chair hose; 2, sand blasting handle; 3, return spring; 4, deflector rod; 5, pin; 6, valve core; 7, duckbill valve; 8, sand powder tank; 9, purging pipe; 10, gas intake duct; 11, cover body; 12, sand outlet pipe; 13, tee-junction; 14, hose; 15, reverse cap; 16, connection joint, 17, reversing valve.

### Detailed Description of Embodiments

The present disclosure will be further described in detail below with reference to the accompanying drawings and embodiments. It should be understood that the specific embodiments described herein are merely used to explain the present disclosure, but not to limit the present disclosure. The described embodiments are only part of the embodiments of the present disclosure, rather than all the embodiments. Based on the embodiments in present disclosure, all other embodiments obtained by those ordinarily skilled in the art without making inventive effort, shall fall within the protection scope of the present disclosure.

It should be noted that, for the convenience of description, only the parts related to the present disclosure are shown in the accompanying drawings. The embodiments in the present disclosure and the features in the embodiments may be combined with each other without conflict.

It should be understood that "system", "device", "unit" and/or "module" as used in the present disclosure is a method used to distinguish different subassemblies, elements, components, parts or assemblies at different levels. However, the words may be replaced by other expressions if other words can serve the same purpose.

As shown in the present disclosure and the claims, unless the context clearly prompts otherwise, the words such as "a", "an", "one" and/or "the" are not intended to be specific in the singular and may also include the plural. Generally speaking, the terms "including" and "comprising" only prompt that the clearly identified steps and elements are included, and these steps and elements do not constitute an exclusive list, and the method or apparatus may also include other steps or elements. The element restricted by the statement "including a..." does not preclude the presence of additional identical elements in the process, method, article or apparatus that includes the element.

In the above, in the description of the embodiments of the present disclosure, unless otherwise specified, "/" means or, for example, A/B may mean A or B; "and/or" in this article is only an association relationship to describe the associated objects, which means that there can be three types of relationships, for example, A and/or B can mean: A exists alone, A and B exist at the same time, and B exists alone as these three situations. In addition, in the description of the embodiments of the present disclosure, "plurality" refers to two or more than two.

Hereinafter, the terms "first" and "second" are merely used for descriptive purposes, and should not be construed as indicating or implying relative importance or implicitly indicating the number of indicated technical features. Thus, a feature defined as "first" or "second" may expressly or implicitly include one or more of that feature.

Flow diagrams are used in the present disclosure to illustrate operations performed by a system according to embodiments of the present disclosure. It should be understood that the preceding or following operations are not necessarily performed in the exact order. Instead, the various steps can be processed in reverse order or simultaneously. At the same time, other operations can also be added to these procedures, or a step or steps of operations can be removed from these procedures.

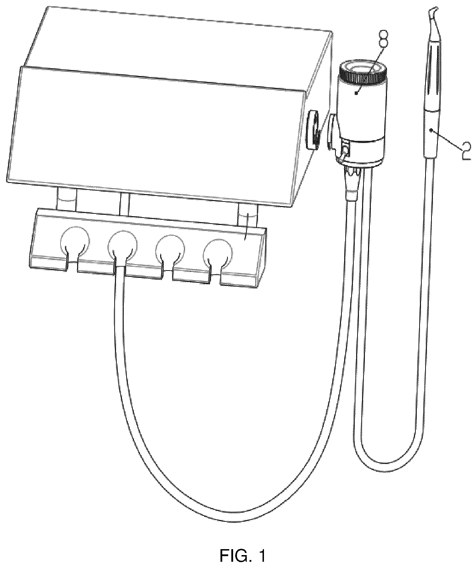

Please refer to FIG. 1 to FIG. 3.

Some embodiments of the present disclosure disclose a dental sand blasting gun, which comprises a sand blasting handle 2 and a sand powder tank 8.

The sand powder tank 8 is configured to be contained with the dental sand blasting powder;
the sand blasting handle 2 is communicated with the sand powder tank 8, and configured to spray the mixture of dental sand blasting powder, compressed gas and liquid medium to the tooth surface of a patient;
the sand powder tank 8 is communicated with the gas supply device of the dental chair through the dental chair hose 1, and the gas supply device is configured to supply compressed gas to the sand powder tank 8, which provides power for the dental sand blasting powder to be sprayed on the tooth surface of the patient.

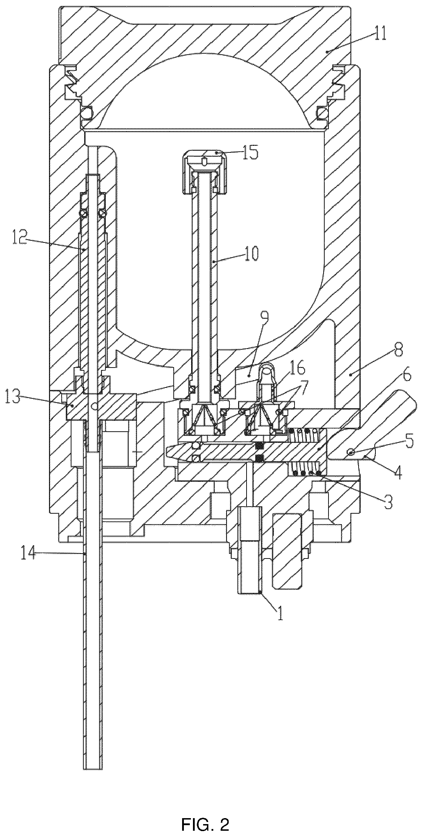

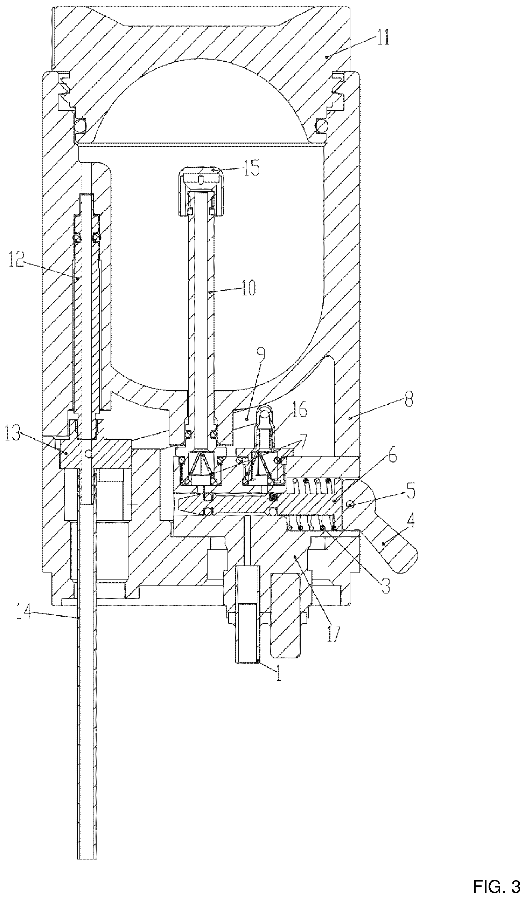

As shown in FIG. 2 and FIG. 3, the lower end of the sand powder tank 8 is provided with a gas inlet hole, a first gas outlet hole and a second gas outlet hole.

The gas inlet end of the gas inlet hole is communicated with the dental chair hose 1, the gas outlet end of the gas inlet hole may be communicated with the gas inlet end of the first gas outlet hole, and the gas outlet end of the first gas outlet hole is communicated with the inner cavity of the sand powder tank 8, the gas inlet hole cooperates with the first gas outlet hole to send the compressed gas provided by the gas supply device into the sand powder tank 8; the gas outlet end of the gas inlet hole may be communicated with the gas inlet end of the second gas outlet hole, and the gas outlet end of the second gas outlet hole is communicated with the sand blasting handle 2 through the purging pipe 9, and the gas inlet hole, the second gas outlet hole and the purging pipe 9 cooperate with each other to directly send the compressed gas provided by the gas supply device into the sand blasting handle 2, which purges the sand blasting handle 2. Preferably, a connection joint 16 configured to connect the purging pipe 9 and the second gas outlet hole is provided on the second gas outlet hole.

The communication between the gas outlet end of the gas inlet hole and the first gas outlet hole or the second gas outlet hole is realized through the reversing valve 17. The reversing valve 17 is configured to control the communication between the gas outlet end of the gas inlet hole and the gas inlet end of the first gas outlet hole or the communication between the gas outlet end of the gas inlet hole and the gas inlet end of the second gas outlet hole.

When the dental sand blasting gun disclosed in the present disclosure cleans the teeth, the reversing valve 17 is located at the first working position, the gas outlet end of the gas inlet hole is communicated with the first gas outlet hole, and the gas outlet end of the gas inlet hole is not communicated with the second gas outlet hole, the compressed gas provided by the gas supply device sequentially passes through the dental chair hose 1, the gas inlet and the first gas outlet to be supplied into the sand powder tank 8, and the compressed gas carries the dental sand blasting powder in the sand powder tank 8 into the sand blasting handle 2, the sand blasting handle 2 sprays the dental sand blasting powder and compressed gas on the tooth surface to mix with the liquid medium for cleaning the tooth surface.

When the dental sand blasting gun disclosed in the present disclosure purges and removes the dental sand blasting powder remained in the sand blasting handle 2, the reversing valve 17 is located at the second working position, and the gas outlet end of the gas inlet hole is communicated with the second gas outlet hole, the gas outlet end of the gas inlet hole is not communicated with the first gas outlet hole, and the compressed gas provided by the gas supply device sequentially passes through the dental chair hose 1, the gas inlet, the second gas outlet and the purging pipe 9 to be supplied into the sand blasting handle 2, and the compressed gas purges and removes the dental sand blasting powder remained in the sand blasting handle 2.

When the dental sand blasting gun disclosed in the present disclosure remove the dental sand blasting powder in the sand blasting handle 2, the dental sand blasting powder in the sand powder tank 8 does not need to be poured out, the reversing valve 17, the second gas outlet and the purging pipe 9 are additionally arranged in the sand powder tank 8, the communication between the gas inlet and the first gas outlet is blocked by the reversing valve 17, so that the gas inlet is communicated with the second gas outlet, and then the compressed gas entering the second gas outlet is introduced into the sand blasting handle 2 through the purging pipe 9, and the dental sand blasting powder remained in the sand blasting handle 2 is purged and removed, thereby reducing the waste of dental sand blasting powder.

In order to prevent the gas from the first gas outlet and the second gas outlet from being sucked back and polluting the dental chair hose, in the present disclosure, duckbill valves 7, or other types of one-way valves are provided in the first gas outlet and the second gas outlet.

In some embodiments of the present disclosure, the reversing valve 17 includes a valve body, a valve core 6 and a drive rod.

In the above, the valve body is connected to the sand powder tank 8, and a valve hole, a first hole, a second hole and a third hole are provided on the valve body, wherein the valve core 6 is installed in the valve hole, and the first hole is communicated with the gas outlet end of the gas inlet hole, the second hole is communicated with the gas inlet end of the first gas outlet hole, and the third hole is communicated with the gas inlet end of the second gas outlet hole. As shown in FIG. 2 and FIG. 3, the first hole is located at an opposite side of an axial line of the valve hole relative to the second hole and the third hole, specifically, the gas inlet hole is located at an opposite side of the valve hole relative to the first gas outlet hole and the second gas outlet hole, the first hole and the gas inlet hole are located at the same side, and the second hole and the third hole are located at the same side as the first gas outlet and the second gas outlet.

An annular groove is provided on the valve core 6, and the groove wall of the annular groove matches with the hole wall of the valve hole to form a channel configured to communicate the gas inlet hole with the first gas outlet hole and the second gas outlet hole, it should be noted herein that, the width of the annular groove in an axial direction of the valve core 6 needs to be smaller than the distance between the first gas outlet hole and the second gas outlet hole, it is ensured that during the movement of the valve core 6 along the valve hole, the gas inlet hole may communicate with the first gas outlet hole and the second gas outlet hole, and only one of the first gas outlet hole and the second gas outlet hole can be communicated.

In order to enhance the sealing effect of the valve core 6, in the present disclosure, sealing rings are provided at the positions of the valve core 6 located at two ends of the annular groove, and the sealing rings may abut against the hole wall of the valve hole.

In order to ensure the connection strength between the sealing ring and the valve core 6, in the present disclosure, the annular groove configured to be installed with the sealing ring is provided on the valve core 6, and the sealing ring is embedded in the annular groove. Preferably, the sealing ring is a rubber ring.

The drive rod is connected to the valve core 6, and the drive rod is configured to drive the valve core 6 to move in the valve hole, specifically, the valve core 6 is arranged coaxially with the valve hole and the movement direction of the valve core 6 is in an axial direction of itself or the valve hole.

The drive rod drives the valve core 6 to move in the valve hole until the annular groove of the valve core 6 is communicated with both the first hole and the second hole, at this time, the gas inlet hole is communicated with the first gas outlet hole, and the compressed gas provided by the gas supply device is supplied into the gas inlet hole and the first gas outlet hole through the dental chair hose 1, and then enters the sand powder tank 8, and the compressed gas carries the dental sand blasting powder in the sand powder tank 8 and enters the sand blasting handle 2.

The drive rod drives the valve core 6 to move in the valve hole until the annular groove of the valve core 6 is communicated with both the first hole and the third hole, at this time, the gas inlet hole is communicated with the second gas outlet hole, and the compressed gas provided by the gas supply device is supplied into the gas inlet hole and the second gas outlet hole through the dental chair hose 1, and then enters the sand blasting handle 2 through the purging pipe 9, and the sand blasting powder remained in the sand blasting handle 2 is purged and removed.

In some embodiments of the present disclosure, the reversing valve 17 further includes a return spring 3.

One end of the valve core cooperating with the drive rod is provided with a baffle plate, the diameter of the baffle plate is larger than the diameter of the valve core, the valve hole includes a first valve hole segment and a second valve hole segment, and the diameter of the first valve hole segment is smaller than the diameter of the second valve hole segment, the baffle plate is located in the second valve hole segment, the valve core 6 may move in the first valve hole segment and the second valve hole segment, and the baffle plate can only move in the second valve hole segment.

Since the diameters of the first valve hole segment and the second valve hole segment are different, a stepped face is formed at the connection position of the first valve hole segment and the second valve hole segment. Preferably, the first valve hole segment and the second valve hole segment are arranged coaxially.

The return spring 3 is sleeved over the valve core 6, and is located between the baffle plate and the stepped surface. Specifically, one end of the return spring 3 abuts against the stepped face, the other end of the return spring 3 abuts against the baffle plate, and the return spring 3 is always in a compressed state.

With reference to the perspectives of FIG. 2 and FIG. 3, it is defined that the first gas outlet hole is located at the left side of the second gas outlet hole, the second gas outlet hole is located at the right side of the first gas outlet hole, and the gas inlet hole is located at the lower side of the first gas outlet hole and the second gas outlet hole and between the first gas outlet hole and the second gas outlet hole, and the first gas outlet hole and the second gas outlet hole are located at the upper side of the gas inlet hole.

The first gas outlet hole and the second gas outlet hole are not limited to the positions shown in the figure, the first gas outlet hole and the second gas outlet hole can be located on the same straight line parallel to the axial line of the valve hole, or can also be respectively located on the different straight lines parallel to the axial line of the valve hole, as long as the distance between the first gas outlet hole and the second gas outlet hole is greater than the width of the annular groove.

The drive rod drives the valve core 6 to move to the left, and squeezes the return spring 3; and the return spring 3 recovers the original state, and the return spring 3 drives the valve core 6 to move to the right. The leftward movement of the valve core 6 is achieved by actuation of the drive rod, and the recovering the original state of the valve core 6 is automatically realized by the return spring. The return spring 3 improves the working reliability of the dental sand blasting gun.

In some embodiments of the present disclosure, the drive rod includes a cam and a deflector rod 4, wherein the cam is located in the valve hole and rotatably connected with the valve body, and the deflector rod 4 is connected to the outer edge of the cam. The cam is driven to rotate by the deflector rod 4, so that the cam pushes the baffle plate to move along the second valve hole segment, and the communication between the gas inlet hole and the first gas outlet hole or the second gas outlet hole is changed.

Preferably, the outer edge of the cam is provided with a first position limit plane and a second position limit plane. The first position limit plane is configured in such a way that the first position limit plane fits with the baffle plate to perform the position limit for the cam when the cam drives the valve core 6 to move to the position where the first hole and the second hole communicate with each other; and the second position limit plane is configured in such a way that the second position limit plane fits with the baffle plate to play a role of the position limit for the cam when the cam drives the valve core 6 to move to the position where the first hole and the third hole communicate with each other. The first position limit plane and the second position limit plane enhance the working stability of the cam and prevent the cam from rotating by itself.

As shown in FIG. 2 and FIG. 3, the cam is hemispherical or semi-cylindrical or semi-ellipsoidal. When the plane of the hemispherical, semi-cylindrical or semi-ellipsoidal cam itself abuts against the baffle plate, at this time, the first hole is communicated with the third hole; and when the cambered surface of the hemispherical, semi-cylindrical or semi-ellipsoidal cam abuts against the baffle plate, preferably, the tangent of the cambered surface is perpendicular to the plane of the hemispherical, semi-cylindrical or semi-ellipsoidal cam itself, at this time, the first hole is communicated with the second hole, in order to improve the stability of the cambered surface abutting against the baffle plate, in the present disclosure, the cambered surface is cut to form a cutting plane, and the cutting plane is perpendicular to the plane of the hemispherical, semi-cylindrical or semi-ellipsoidal cam itself.

In this embodiment, the deflector rod 4 is connected to the cambered surface of the hemispherical, semi-cylindrical or semi-ellipsoidal cam, and the deflector rod 4 is provided in a radial direction of the hemispherical, semi-cylindrical or semi-ellipsoidal cam, the deflector rod 4 may be rotated by 90°.

The staff manually pulls the deflector rod 4 to realize the position adjustment of the valve core 6, and the adjustment method is simple and reliable.

In order to reduce the difficulty of connecting the cam and the deflector rod 4, preferably, the cam and the deflector rod 4 are integrally formed.

In some embodiments of the present disclosure, the cam and the valve body are rotatably connected by a pin 5, the axial line of the pin 5 is perpendicular to the axial line of the valve core 6, and the rotation direction of the cam is an up-down direction.

As shown in FIG. 2 and FIG. 3, a cavity body for accommodating dental sand blasting powder is provided in the sand powder tank 8, the lower end of the sand powder tank 8 is a closed end, and the upper end of the sand powder tank 8 is an open end.

The reversing valve 17 is located at the closed end of the sand powder tank 8, the closed end is provided with a first gas outlet hole, and a gas intake duct 10 is provided in the sand powder tank, the lower end of the gas intake duct 10 is communicated with the first gas outlet hole, and the upper end of the gas intake duct is communicated with the cavity body of the sand powder tank 8, and the gas intake duct extends upward to the open end of the sand powder tank 8.

The upper end of the gas intake duct 10 is provided with a reverse cap 15, and the reverse cap 15 covers on the upper end (that is, the gas outlet end) of the gas intake duct 10, which plays a downward guiding role for the compressed gas discharged from the upper end of the gas intake duct 10, the compressed gas is enabled to blow the dental sand blasting powder located at the closed end of the sand powder tank 8, and then the compressed gas carries the dental sand blasting powder into the sand blasting handle 2.

As shown in FIG. 2 and FIG. 3, the compressed gas enters the gas intake duct 10 to pass through the reverse cap 15 and moves downward first, then moves upward, and enters the sand blasting handle 2 through the sand outlet pipe 12.

In a specific embodiment of the present disclosure, an installation groove is provided on the reverse cap 15, the reverse cap 15 is covered on the gas intake duct 10 through the installation groove, and the reverse cap 15 is connected to the gas intake duct 10 by screw threads, the side wall of the reverse cap 15 is provided with gas guide holes communicated with the installation groove of the reverse cap, a plurality of gas guide holes are provided and evenly distributed in a circumferential direction of the reverse cap 15, one end of the gas guide hole is communicated with the installation groove, and the other end of the gas guide hole is communicated with the inner cavity of the sand powder tank 8. The gas entering the gas intake duct 10 passes through the installation groove and the gas guide holes in sequence to enter the sand powder tank 8.

In order to ensure the tightness between the reverse cap 15 and the gas intake duct 10, an O-shape sealing ring is provided between the reverse cap 15 and the gas intake duct 10.

The open end of the sand powder tank 8 is provided with a cover body 11, and the dental sand blasting powder enters the sand powder tank 8 through the open end of the sand powder tank 8. In order to reduce the difficulty of adding dental sand blasting powder to the sand powder tank 8, in the present disclosure, the cover body 11 is threadedly connected to the open end of the sand powder tank 8.

The mixture of dental sand blasting powder and compressed gas formed in the sand powder tank 8 after being disturbed by the compressed gas is located at the open end of the sand powder tank 8. In the present disclosure, a sand outlet pipe 12 is provided on the side wall of the sand powder tank 8, the upper end of the sand outlet pipe 12 is communicated with the inner cavity of the sand powder tank 8, and the lower end of the sand outlet pipe 12 is communicated with the sand blasting handle 2.

The sand outlet pipe 12 not only communicates with the inner cavity of the sand powder tank 8 and the sand blasting handle 2, but also communicates with the purging pipe 9. Preferably, the purging pipe 9 is communicated with the lower end of the sand outlet pipe 12 through the tee-junction 13.

As shown in FIG. 2 and FIG. 3, the lower end of the sand powder tank 8 is provided with a spherical guide plate, the inner arc surface of the spherical guide plate faces toward the gas intake duct 10, and a third gas outlet hole communicated with the first gas outlet hole is provided on the spherical guide plate, and the gas intake duct 10 is installed in the third gas outlet hole.

The spherical guide plate can play a role of guiding the dental sand blasting powder disturbed by the compressed gas, and facilitate the upward movement of the mixture of the dental sand blasting powder and the compressed gas.

In some embodiments of the present disclosure, the sand blasting handle 2 and the sand powder tank 8 are in a divided structure, that is, the sand blasting handle 2 and the sand powder tank 8 are provided separately. Specifically, the sand blasting handle 2 and the sand powder tank 8 areconnected through a hose 14, as shown in FIG. 1-FIG. 3, the sand blasting handle 2 is communicated with the sand outlet pipe 12 through the hose 14, and the sand powder tank 8 is communicated with the gas supply device of the dental chair through the dental chair hose 1 of the dental chair. During purging, the dental sand blasting powder remaining in the hose 14 can also be purged and removed.

In the present disclosure, the sand blasting handle 2 and the sand powder tank 8 are provided separately, simultaneously, the sand powder tank 8 with heavier weight is fixed on the dental chair, when a medical staff operates the dental sand blasting gun, they only need to hold the sand blasting handle 1, which reduces the weight of the hand-held part, reduces the manual labor intensity of medical staff using the dental sand blasting gun, and achieves higher comfort; simultaneously, the sand powder tank 8 with larger volume does not occupy the upper space of the sand blasting handle 2 by being fixed on the dental chair, which reduces the influence on the visual field when the medical staff cleans the teeth of patient, and improves the convenience of using the dental sand blasting gun and the cleaning effect on the oral cavity.

In some embodiments of the present disclosure, the sand powder tank 8 cooperates with and is connected with the dental chair through a bracket and a hook, specifically, the hook is provided on the sand powder tank 8, the bracket is provided on the dental chair, and the sand powder tank 8 is connected to the bracket of the dental chair through the hook.

The placement angle of the sand powder tank 8 will affect the sand output amount of the sand blasting handle 2, and the sand output amount is one of the important indicators of the performance of the sand blasting gun. Preferably, when the placement angle of the sand powder tank 8 is 90° with the horizontal direction, the sand output amount is optimal.

The present disclosure is described with reference to methods, devices (systems), and flowcharts and/or block diagrams of computer program products in the embodiments of the present disclosure. It will be understood that each flow and/or block in the flowcharts and/or block diagrams, and the combinations of flows and/or blocks in the flowcharts and/or block diagrams, can be implemented by computer program instructions. These computer program instructions may be provided to a general purpose computer, a special purpose computer, an embedded processor or a processor of other programmable data processing device to produce a machine, so that the instructions executed by the computer or the processor of other programmable data processing device produce a device for implementing the functions specified in a flow or flows of the flowcharts and/or a block or blocks of the block diagrams.

These computer program instructions may also be stored in a computer-readable memory capable of directing a computer or other programmable data processing device to operate in a particular manner, such that the instructions stored in the computer-readable memory produce an article of manufacture comprising an instruction device, the instruction device implements the functions specified in a flow or flows of the flowcharts and/or a block or blocks of the block diagrams.

These computer program instructions can also be loaded on a computer or other programmable data processing device, so that a series of operational steps can be executed on the computer or other programmable device to produce a computer-implemented process, and that instructions executed on the computer or other programmable device provide steps for implementing the functions specified in a flow or flows of the flowcharts and/or a block or blocks of the block diagrams.

In a typical configuration, a computing device includes one or more processors (CPU), input/output interfaces, network interfaces, and internal storage.

Memory may include non-persistent memory, random access memory (RAM) and/or non-volatile memory and other forms in a computer-readable medium, for example, read only memory (ROM) or flash memory (flash RAM). Memory is an example of the computer-readable medium.

Computer-readable medium includes persistent and non-persistent, removable and non-removable media, and storage of information can be implemented by any method or technology. Information may be computer readable instructions, data structures, modules of programs, or other data. Examples of computer storage medium include, but are not limited to, phase-change memory (PRAM), static random access memory (SRAM), dynamic random access memory (DRAM), other types of random access memory (RAM), read only memory (ROM), electrically erasable programmable read only memory (EEPROM), flash memory or other memory technology, compact disc read only memory (CD-ROM), digital versatile disc (DVD) or other optical storage, magnetic tape cassettes, magnetic tape magnetic disk storage or other magnetic storage devices or any other non-transmission medium that can be used to store information which can be accessed by a computing device. As defined herein, computer-readable medium does not include transitory computer-readable media (transitory media), such as modulated data signals and carrier waves.

It will be appreciated by those skilled in the art that the embodiments of the present disclosure may be provided as a method, a system or a computer program product. Therefore, the present disclosure may use the form of a full hardware embodiment, and a full software embodiment, or an embodiment combining software and hardware aspects. Furthermore, the present disclosure may use the form of a computer program product implemented on one or more computer-usable storage medium (including, but not limited to, disk storage, CD-ROM, and optical storage and the like.) having computer-usable program code therein.

## Claims

1. A dental sand blasting gun, comprising
a sand blasting handle (2) and
a sand powder tank (8), wherein
the sand blasting handle (2) is communicated with the sand powder tank (8), and
the sand powder tank (8) is communicated with a gas supply device of a dental chair through a dental chair hose (1), and
the gas supply device supplies compressed air to the sand powder tank (8) through the dental chair hose (1),
a lower end of the sand powder tank (8) is provided with a gas inlet hole, and
a gas inlet end of the gas inlet hole is communicated with the dental chair hose (1),
**characterised in that**
the lower end of the sand powder tank (8) is provided with a first gas outlet hole and a second gas outlet hole,
wherein a gas outlet end of the first gas outlet hole is communicated with an inner cavity of the sand powder tank (8), and
a gas outlet end of the second gas outlet hole is communicated with the sand blasting handle (2) through a purging pipe (9); and
a gas inlet end of the first gas outlet hole and a gas inlet end of the second gas outlet hole are communicated with a gas outlet end of the gas inlet hole through a reversing valve (17), wherein
the reversing valve (17) is configured to control the gas inlet hole to be communicated with the first gas outlet hole or the second gas outlet hole.

2. The dental sand blasting gun according to claim 1, wherein
the reversing valve (17) comprises a valve body, a valve core (6) and a drive rod, wherein
the valve body is connected to the sand powder tank (8); and
a valve hole, a first hole communicated with the gas inlet hole, a second hole communicated with the first gas outlet hole and a third hole communicated with the second gas outlet hole are provided on the valve body, wherein
the first hole is located at an opposite side of an axial line of the valve hole relative to the second hole and
the third hole, and the first hole is located between the second hole and the third hole; and
the valve core (6) is installed in the valve hole;
an annular groove is formed on the valve core (6);
the annular groove is configured to be communicated with the first hole and the second hole or to be communicated with the first hole and the third hole,
a position of the valve core (6) located at two ends of the annular groove is provided with a sealing ring;
the valve core (6) is connected with the drive rod; and
the drive rod is configured to drive the valve core (6) to move in the valve hole.

3. The dental sand blasting gun according to claim 2, wherein
a baffle plate is provided at one end of the valve core (6) cooperating with the drive rod, and
a diameter of the baffle plate is larger than a diameter of the valve core (6);
the valve hole comprises a first valve hole segment and a second valve hole segment, wherein
a diameter of the first valve hole segment is smaller than a diameter of the second valve hole segment, and
the baffle plate slides in the second valve hole segment; and
the reversing valve (17) further comprises a return spring (3),
the return spring (3) is sleeved over the valve core (6), and
one end of the return spring (3) can abut against a stepped face formed between the first valve hole segment and the second valve hole segment, and
the other end of the return spring (3) can abut against the baffle plate.

4. The dental sand blasting gun according to claim 3, wherein
the drive rod comprises a cam and a deflector rod (4), wherein
the cam is located in the valve hole and is rotatably connected to the valve body, the deflector rod (4) is connected to an outer edge of the cam and configured to drive the cam to rotate, and
the cam pushes the baffle plate to move along the second valve hole segment, and
the cam and the deflector rod (4) are integrally formed.

5. The dental sand blasting gun according to claim 4, wherein
the cam and the valve body are connected by a pin (5).

6. The dental sand blasting gun according to claim 1, wherein
a gas intake duct (10) is provided in the sand powder tank (8), wherein
a lower end of the gas intake duct (10) communicates with the first gas outlet hole, and
a upper end of the gas intake duct (10) is provided with a reverse cap (15), and the reverse cap (15) is configured to guide compressed gas discharged from the gas intake duct (10) downward.

7. The dental sand blasting gun according to claim 6, wherein
a lower end of the sand powder tank (8) is provided with a spherical guide plate, an inner arc surface of the spherical guide plate faces toward the gas intake duct (10), and
a third gas outlet hole communicated with the first gas outlet hole is provided on the spherical guide plate, and
the gas intake duct (10) is installed in the third gas outlet hole.

8. The dental sand blasting gun according to claim 1, wherein
a sand outlet pipe (12) of the sand powder tank (8) is provided on a side wall of the sand powder tank (8),
a upper end of the sand outlet pipe (12) is communicated with the inner cavity of the sand powder tank (8), and
a lower end of the sand outlet pipe (12) is communicated with the sand blasting handle (2), and
the sand outlet pipe (12) is communicated with the purging pipe (9).

9. The dental sand blasting gun according to claim 8, wherein
the sand blasting handle (2) is communicated with the sand outlet pipe (12) through a hose (14), and
the sand powder tank (8) may be installed on the dental chair.

10. The dental sand blasting gun according to claim 1, wherein
duckbill valves (7) are provided in the first gas outlet hole and the second gas outlet hole.

## Patentansprüche

1. Eine dentale Sandstrahlpistole, aufweisend
einen Sandstrahlgriff (2) und
einen Sandpulvertank (8), wobei
der Sandstrahlgriff (2) mit dem Sandpulvertank (8) verbunden ist, und
der Sandpulvertank (8) mit einer Gaszufuhrvorrichtung eines Zahnarztstuhls durch einen Zahnarztstuhlschlauch (1) verbunden ist, und
die Gaszufuhrvorrichtung Druckluft zu dem Sandpulvertank (8) durch den Zahnarztstuhlschlauch (1) zuführt,
ein unteres Ende des Sandpulvertanks (8) mit einer Gaseinlassöffnung versehen ist, und
ein Gaseinlassende der Gaseinlassöffnung mit dem Zahnarztstuhlschlauch (1) verbunden ist,
**dadurch gekennzeichnet, dass**
das untere Ende des Sandpulvertanks (8) mit einer ersten Gasauslassöffnung und einer zweiten Gasauslassöffnung versehen ist,
wobei ein Gasauslassende der ersten Gasauslassöffnung mit einer inneren Kavität des Sandpulvertanks (8) verbunden ist, und
ein Gasauslassende der zweiten Gasauslassöffnung mit dem Sandstrahlgriff (2) durch ein Spülrohr (9) verbunden ist; und
ein Gaseinlassende der ersten Gasauslassöffnung und ein Gaseinlassende der zweiten Gasauslassöffnung mit einem Gasauslassende der Gaseinlassöffnung durch ein Umschaltventil (17) verbunden sind, wobei
das Umschaltventil (17) konfiguriert ist, um die Gaseinlassöffnung zu steuern, um mit der ersten Gasauslassöffnung oder der zweiten Gasauslassöffnung verbunden zu werden.

2. Die dentale Sandstrahlpistole gemäß Anspruch 1, wobei
das Umschaltventil (17) einen Ventilkörper, einen Ventilkern (6) und eine Antriebsstange aufweist, wobei
der Ventilkörper mit dem Sandpulvertank (8) verbunden ist; und eine Ventilöffnung, eine erste Öffnung, die mit der Gaseinlassöffnung verbunden ist, eine zweite Öffnung, die mit der ersten Gasauslassöffnung verbunden ist, und eine dritte Öffnung, die mit der zweiten Gasauslassöffnung verbunden ist, an dem Ventilkörper vorgesehen sind, wobei
die erste Öffnung an einer gegenüberliegenden Seite einer axialen Linie der Ventilöffnung relativ zu der zweiten Öffnung angeordnet ist und
die dritte Öffnung und die erste Öffnung zwischen der zweiten Öffnung und der dritten Öffnung angeordnet sind; und
der Ventilkern (6) in der Ventilöffnung installiert ist;
eine ringförmige Nut an dem Ventilkern (6) gebildet ist;
die ringförmige Nut konfiguriert ist, um mit der ersten Öffnung und der zweiten Öffnung verbunden zu werden oder um mit der ersten Öffnung und der dritten Öffnung verbunden zu werden,
eine Position des Ventilkerns (6), die an zwei Enden der ringförmigen Nut angeordnet ist, mit einem Dichtungsring versehen ist;
der Ventilkern (6) mit der Antriebsstange verbunden ist; und die Antriebsstange konfiguriert ist, um den Ventilkern (6) anzutreiben, sich in der Ventilöffnung zu bewegen.

3. Die dentale Sandstrahlpistole gemäß Anspruch 2, wobei
eine Prallplatte an einem Ende des Ventilkerns (6) vorgesehen ist, die mit der Antriebsstange zusammenwirkt, und
ein Durchmesser der Prallplatte größer als ein Durchmesser des Ventilkerns (6) ist;
die Ventilöffnung ein erstes Ventilöffnungssegment und ein zweites Ventilöffnungssegment aufweist, wobei
ein Durchmesser des ersten Ventilöffnungssegments kleiner als ein Durchmesser des zweiten Ventilöffnungssegments ist, und
die Prallplatte in dem zweiten Ventilöffnungssegment gleitet; und
das Umschaltventil (17) ferner eine Rückstellfeder (3) aufweist, die Rückstellfeder (3) hülsenartig über den Ventilkern (6) geschoben ist, und ein Ende der Rückstellfeder (3) an einer Stufenfläche anliegen kann, die zwischen dem ersten Ventilöffnungssegment und dem zweiten Ventilöffnungssegment gebildet ist, und
das andere Ende der Rückstellfeder (3) an der Prallplatte anliegen kann.

4. Die dentale Sandstrahlpistole gemäß Anspruch 3, wobei
die Antriebsstange einen Nocken und eine Ablenkstange (4) aufweist, wobei
der Nocken in der Ventilöffnung angeordnet ist und drehbar mit dem Ventilkörper verbunden ist,
die Ablenkstange (4) mit einer Außenkante des Nockens verbunden ist und konfiguriert ist, um den Nocken anzutreiben, sich zu drehen, und der Nocken die Prallplatte drückt, damit sie sich entlang des zweiten Ventilöffnungssegments bewegt, und
der Nocken und die Ablenkstange (4) integral gebildet sind.

5. Die dentale Sandstrahlpistole gemäß Anspruch 4, wobei
der Nocken und der Ventilkörper durch einen Stift (5) verbunden sind.

6. Die dentale Sandstrahlpistole gemäß Anspruch 1, wobei
eine Gaseinlassleitung (10) in dem Sandpulvertank (8) vorgesehen ist, wobei
ein unteres Ende der Gaseinlassleitung (10) mit der ersten Gasauslassöffnung verbunden ist, und
ein oberes Ende der Gaseinlassleitung (10) mit einer Umkehrkappe (15) versehen ist, und
die Umkehrkappe (15) konfiguriert ist, um komprimiertes Gas, das von der Gaseinlassleitung (10) abgegeben wird, nach unten zu führen.

7. Die dentale Sandstrahlpistole gemäß Anspruch 6, wobei
ein unteres Ende des Sandpulvertanks (8) mit einer kugelförmigen Führungsplatte versehen ist,
eine innere Bogenfläche der kugelförmigen Führungsplatte der Gaseinlassleitung (10) zugewandt ist, und
eine dritte Gasauslassöffnung, die mit der ersten Gasauslassöffnung verbunden ist, an der kugelförmigen Führungsplatte vorgesehen ist, und die Gaseinlassleitung (10) in der dritten Gasauslassöffnung installiert ist.

8. Die dentale Sandstrahlpistole gemäß Anspruch 1, wobei
ein Sandauslassrohr (12) des Sandpulvertanks (8) an einer Seitenwand des Sandpulvertanks (8) vorgesehen ist,
ein oberes Ende des Sandauslassrohrs (12) mit der inneren Kavität des Sandpulvertanks (8) verbunden ist, und
ein unteres Ende des Sandauslassrohrs (12) mit dem Sandstrahlgriff (2) verbunden ist, und
das Sandauslassrohr (12) mit dem Spülrohr (9) verbunden ist.

9. Die dentale Sandstrahlpistole gemäß Anspruch 8, wobei
der Sandstrahlgriff (2) mit dem Sandauslassrohr (12) durch einen Schlauch (14) verbunden ist, und
der Sandpulvertank (8) an dem Zahnarztstuhl installiert werden kann.

10. Die dentale Sandstrahlpistole gemäß Anspruch 1, wobei
Schnabelventile (7) in der ersten Gasauslassöffnung und der zweiten Gasauslassöffnung vorgesehen sind.

## Revendications

1. Pistolet de sablage dentaire, comprenant
une poignée de sablage (2) et
un réservoir de poudre de sable (8), dans lequel
la poignée de sablage (2) est en communication avec le réservoir de poudre de sable (8), et
le réservoir de poudre de sable (8) est en communication avec un dispositif d'alimentation en gaz d'un fauteuil dentaire par l'intermédiaire d'un flexible de fauteuil dentaire (1), et
le dispositif d'alimentation en gaz fournit de l'air comprimé au réservoir de poudre de sable (8) par l'intermédiaire du flexible de fauteuil dentaire (1),
une extrémité inférieure du réservoir de poudre de sable (8) est pourvue d'un trou d'entrée de gaz, et
une extrémité d'entrée de gaz du trou d'entrée de gaz est en communication avec le flexible de fauteuil dentaire (1),
**caractérisé en ce que**
l'extrémité inférieure du réservoir de poudre de sable (8) est pourvue d'un premier trou de sortie de gaz et d'un deuxième trou de sortie de gaz,
dans lequel une extrémité de sortie de gaz du premier trou de sortie de gaz est en communication avec une cavité interne du réservoir de poudre de sable (8), et
une extrémité de sortie de gaz du deuxième trou de sortie de gaz est en communication avec la poignée de sablage (2) via un tuyau de purge (9) ; et
une extrémité d'entrée de gaz du premier trou de sortie de gaz et une extrémité d'entrée de gaz du deuxième trou de sortie de gaz sont en communication avec une extrémité de sortie de gaz du trou d'entrée de gaz par l'intermédiaire d'une vanne d'inversion (17), dans lequel
la vanne d'inversion (17) est configurée pour commander le trou d'entrée de gaz pour être en communication avec le premier trou de sortie de gaz ou le deuxième trou de sortie de gaz.

2. Pistolet de sablage dentaire selon la revendication 1, dans lequel
la vanne d'inversion (17) comprend un corps de vanne, un noyau de vanne (6) et une tige d'entraînement, dans lequel
le corps de vanne est connecté au réservoir de poudre de sable (8) ; et
un trou de vanne, un premier trou en communication avec le trou d'entrée de gaz, un deuxième trou en communication avec le premier trou de sortie de gaz et un troisième trou en communication avec le deuxième trou de sortie de gaz sont prévus sur le corps de vanne, dans lequel
le premier trou est situé d'un côté opposé d'une ligne axiale du trou de vanne par rapport au deuxième trou, et
le troisième trou, et le premier trou est situé entre le deuxième trou et le troisième trou ; et
le noyau de vanne (6) est installé dans le trou de vanne ;
une rainure annulaire est formée sur le noyau de vanne (6) ;
la rainure annulaire est configurée pour être mise en communication avec le premier trou et le deuxième trou ou pour être mise en communication avec le premier trou et le troisième trou,
une position du noyau de vanne (6) située aux deux extrémités de la rainure annulaire est pourvue d'une bague d'étanchéité ;
le noyau de vanne (6) est relié à la tige d'entraînement ; et
la tige d'entraînement est configurée pour entraîner le noyau de vanne (6) à se déplacer dans le trou de vanne.

3. Pistolet de sablage dentaire selon la revendication 2, dans lequel
une plaque déflectrice est prévue à une extrémité du noyau de vanne (6) coopérant avec la tige d'entraînement, et
un diamètre de la plaque déflectrice est supérieur à un diamètre du noyau de vanne (6) ;
le trou de vanne comprend un premier segment de trou de vanne et un second segment de trou de vanne, dans lequel
un diamètre du premier segment de trou de vanne est inférieur à un diamètre du second segment de trou de vanne, et
la plaque déflectrice coulisse dans le second segment de trou de vanne ; et
la vanne d'inversion (17) comprend en outre un ressort de rappel (3),
le ressort de rappel (3) est manchonné sur le noyau de vanne (6), et
une extrémité du ressort de rappel (3) peut venir en butée contre une face étagée formée entre le premier segment de trou de vanne et le second segment de trou de vanne, et
l'autre extrémité du ressort de rappel (3) peut venir en butée contre la plaque déflectrice.

4. Pistolet de sablage dentaire selon la revendication 3, dans lequel
la tige d'entraînement comprend une came et une tige de déflecteur (4), dans lequel
la came est située dans le trou de vanne et est reliée de manière rotative au corps de vanne,
la tige de déflecteur (4) est reliée à un bord extérieur de la came et est configurée pour entraîner la came en rotation, et
la came pousse la plaque déflectrice à se déplacer le long du second segment de trou de vanne, et
la came et la tige de déflecteur (4) sont formées d'un seul tenant.

5. Pistolet de sablage dentaire selon la revendication 4, dans lequel la came et le corps de vanne sont reliés par une broche (5).

6. Pistolet de sablage dentaire selon la revendication 1, dans lequel
un conduit d'admission de gaz (10) est prévu dans le réservoir de poudre de sable (8), dans lequel
une extrémité inférieure du conduit d'admission de gaz (10) communique avec le premier trou de sortie de gaz, et
une extrémité supérieure du conduit d'admission de gaz (10) est pourvue d'un capuchon inversé (15), et
le capuchon inversé (15) est configuré pour guider le gaz comprimé déchargé à partir du conduit d'admission de gaz (10) vers le bas.

7. Pistolet de sablage dentaire selon la revendication 6, dans lequel
une extrémité inférieure du réservoir de poudre de sable (8) est pourvue d'une plaque de guidage sphérique,
une surface en arc interne de la plaque de guidage sphérique fait face au conduit d'admission de gaz (10), et
un troisième trou de sortie de gaz en communication avec le premier trou de sortie de gaz est prévu sur la plaque de guidage sphérique, et
le conduit d'admission de gaz (10) est installé dans le troisième trou de sortie de gaz.

8. Pistolet de sablage dentaire selon la revendication 1, dans lequel
un tuyau de sortie de sable (12) du réservoir de poudre de sable (8) est prévu sur une paroi latérale du réservoir de poudre de sable (8),
une extrémité supérieure du tuyau de sortie de sable (12) est mise en communication avec la cavité interne du réservoir de poudre de sable (8), et
une extrémité inférieure du tuyau de sortie de sable (12) est mise en communication avec la poignée de sablage (2), et
le tuyau de sortie de sable (12) est mis en communication avec le tuyau de purge (9).

9. Pistolet de sablage dentaire selon la revendication 8, dans lequel
la poignée de sablage (2) est mise en communication avec le tuyau de sortie de sable (12) via un flexible (14), et
le réservoir de poudre de sable (8) peut être installé sur le fauteuil dentaire.

10. Pistolet de sablage dentaire selon la revendication 1, dans lequel des vannes en bec de canard (7) sont prévues dans le premier trou de sortie de gaz et le deuxième trou de sortie de gaz.
